# EUROPÄISCHE PATENTSCHRIFT

(11) **EP 2 943 541 B1**
(45) Veröffentlichungstag und Bekanntmachung des Hinweises auf die Patenterteilung: **15.03.2017**
(21) Anmeldenummer: 14700290.1
(22) Anmeldetag: 10.01.2014
(51) Int. Cl.: C09D 125/14, C09D 133/10, C09D 5/28, C09D 7/12, D21H 17/37, D21H 19/68

(54) **LACK MIT MIKROSTRUKTUR**
VARNISH HAVING A MICROSTRUCTURE
LAQUE AVEC MICROSTRUCTURE

(30) Priorität: 14.01.2013 EP 13151210
(43) Veröffentlichungstag der Anmeldung: 18.11.2015
(73) Patentinhaber: Actega Terra GmbH, 31275 Lehrte (DE)
(72) Erfinder: CZUDAJ, Violetta, 31303 Burgdorf (DE); KAMPHUIS, Frank, 31535 Neustadt a. Rbge. (DE); KÖHLER, Martin, 30455 Hannover (DE); MELZER, Uta, 30916 Isernhagen (DE)
(74) Vertreter: Braun, Nils
(86) Internationale Anmeldenummer: PCT/EP2014/050359
(87) Internationale Veröffentlichungsnummer: WO 2014/108491

(56) Entgegenhaltungen:
- EP-A1- 0 543 385
- US-A1- 2011 237 736
- DATABASE WPI Week 200454 Thomson Scientific, London, GB; AN 2004-556642 XP002693718, -& JP 2004 204050 A (TOYO INK MFG CO LTD) 22. Juli 2004 (2004-07-22)

## Beschreibung

Die vorliegende Anmeldung betrifft wässrige Lackzusammensetzungen, die auf Substrate aufgebracht werden können. Solche Substrate können beispielsweise Papier, Karton und Folie sein. Daraus produzierte Druckerzeugnisse sind in der Regel Etiketten, Faltschachteln, Akzidenzen (Broschüren, Werbung), Kartonverpackungen (z.B. Umkartons, Runddosen). Die Anmeldung betrifft außerdem auf die Verwendung wässriger Lackzusammensetzungen zur Herstellung eines Lackfilms auf einem Substrat, sowie mit einem Lackfilm versehene Substrate.

### Hintergrund der Erfindung

Für die Herstellung von Druckerzeugnissen wie Etiketten, Akzidenzen und Faltschachteln hat sich der Einsatz von wasserbasierten Lacken oder Lackzusammensetzungen, auch als Wasserlacke bezeichnet, bewährt. Gerade in der Verarbeitung in integrierten Lackierwerken im Bogenoffset-Druck haben sich seit Ende der 70er Jahre wasserbasierte Lacke für den Schutz von ölbasierter Druckfarbe als sogenannte Überdrucklacke (overprint varnish, OPV) erfolgreich etabliert.

Die Grundvoraussetzung für die Eignung einer Lackzusammensetzung als Überdrucklack ist dabei, dass die Lackzusammensetzung die vorher nasse, ölbasierte Druckfarbe, die auf ein Substrat aufgebracht wurde, benetzt und einen Schutzfilm darüber ausbildet.

Ein klassischer Wasserlack hat in der Regel eine oder mehrere der folgenden Funktionen:
- Schutz der Druckfarbe vor Abrieb;
- Erzielung verschiedener Glanzniveaus von matt bis hochglänzend;
- Erzielung verschiedenen Gleitverhaltens von stumpf bis glatt; und
- Versiegelung der Oberfläche; die verwendeten Lacke sind nach Trocknung geruchsneutral und geschmacksneutral

Es ist darüber hinaus wünschenswert, wenn weitere Funktionen erfüllt werden, wie beispielsweise eine Antisiegelung gegen Einschlagfolie, eine temporäre Barriere gegen Wasser oder Fett, oder ähnliche Funktionen.

Schließlich sollen die wässrigen Lackzusammensetzungen auch hinsichtlich ihrer Verarbeitbarkeit gewisse Anforderungen erfüllen. Beispielsweise soll die Maschinengängigkeit gewährleistet sein, d.h. bei üblichen Druckgeschwindigkeiten von 10 000 bis 15 000 Bogen/h und bis zu 18 000 Bogen/h im Bogenoffsetdruck muss der Lack gleichmäßig zu einem Film aufgetragen und getrocknet werden können. Die Durchlaufzeit durch den Trockner beträgt dabei üblicherweise deutlich weniger als 0,5 Sekunden. Die Trockner sind in der Regel eine Kombination aus IR-Strahler und Heißluftgebläse. Die im Trockner herrschende Temperatur liegt üblicherweise zwischen 60 und 80 °C, wenn möglich bei 80 °C, und später im Stapel bei 30 bis 40 °C. Bei der Trocknung wird dem Lack zumindest Teile des Wassers und gegebenenfalls andere Stoffe, wie z.B. Ammoniak, entzogen und die Bindemittelteilchen des Lacks nähern sich soweit an, dass ein Lackfilm entsteht. Alle diese Anforderungen sollen auch an eine neue Lackzusammensetzung gestellt werden können.

Um als durchgehender Überdrucklackfilm auf einem Substrat aufgebracht werden zu können, muss die wässrige Lackzusammensetzung zum einen das bedruckte Substrat, d.h., die Druckfarbe, und zum anderen das Substrat selbst benetzen. An Bereichen, an denen keine Druckfarbe aufgetragen ist, muss der Lack daher lediglich auf dem Substrat, beispielsweise einer Kartonoberfläche, einen durchgängigen Film ausbilden, d.h., verfilmen.

Der wässrige Lack wird beispielsweise mit 3,5 - 5 g/m² nass appliziert. Bei einem Festkörpergehalt der wässrigen Lackzusammensetzung von 30 - 45 % verbleibt je nach Lackformulierung nach der Trocknung ein Trockenfilm mit ca. 1 bis 2,25 g/m² auf dem Substrat zurück. Dieser Trockenfilm soll dann ein geeignetes Eigenschaftsprofil aufbauen, um beispielsweise einen Scheuerschutz zu gewährleisten. Der Trockenfilm soll ebenfalls eine gewisse Beständigkeit gegen Feuchtigkeit ausweisen und soll sich unter Einfluss von Feuchtigkeit nicht zu schnell anlösen und dann gegebenenfalls kleben.

Der Grund liegt darin, dass in dem Druckprozess Feuchtigkeit eingebracht wird (im Offsetdruck wird die Druckfarbenbelegung mit Hilfe von Feuchtwasser gesteuert). Später beim Verkleben von Substraten mit Klebstoff, beispielsweise in der Produktion von Faltschachteln, soll sich der Lack nicht wieder anlösen. Feuchtigkeit kann auch beim Abfüllen eines Füllgutes eine Rolle spielen, z.B. bei Tiefkühlkost oder während des Transportes bei erhöhten Temperaturen von z.B. 70 °C und entsprechender relativer Feuchte (Transport im LKW in warmen und feuchten Ländern).

Daher wird üblicherweise eine Lackzusammensetzung so gewählt, dass der Lack bei den üblichen Temperaturen von 60 - 80 °C im Trockner (Zeitfenster weniger als 0,5 Sekunden) verfilmen kann und später als Lackfilm eine temporärere Barriere gegen Wasser aufbaut. Das bedeutet, dass die Mindestfilmtemperatur (MFT) der eingesetzten Lacke in der Regel niedriger als 80 °C, standardmäßig zwischen 1 °C und 60 °C liegt.

Eine herkömmliche Lackzusammensetzung enthält als Hauptbestandteil zumeist eine Polymerdispersion und daneben oft eine Polymerharz. Das Polymerharz ist meist mit Ammoniak alkalisch neutralisiert und es gibt verschiedene Harztypen mit unterschiedlichen Säurezahlen, Molmassenverteilung und Glasübergangstemperaturen, die zum Einsatz kommen können. Es wird eine Vielzahl von unterschiedlichen Dispersionen mit unterschiedlichen, geeigneten Glasübergangstemperaturen (T_{G}) eingesetzt.

Die Mindestfilmtemperatur liegt bei einem Standardlack bei + 1 °C bis + 60 °C, bevorzugt bei 30 bis 50 °C. In diesem Bereich der MFT wird eine gute Verfilmung erreicht. Der Lack bildet dabei einen geschlossenen Film.

Aufgrund des oben genannten Eigenschafts- und Anwendungsprofils bezeichnet man solche Lacke auch als graphische Überdrucklacke (overprint varnish, OPV). Wasserbasierte Lacksysteme werden weiterhin neben den genannten konventionellen Druckprozessen gelegentlich auch im Digitaldruck, beispielsweise in Tintenstrahldruck-Verfahren, sowohl als Überdrucklack aber auch als Primer (Grundierung) vorteilhaft eingesetzt.

Herkömmliche Wasserlacke besitzen jedoch den Nachteil, dass eine Bedruckung der Lacke mittels Tintenstrahldruck mit erheblichen Schwierigkeiten verbunden ist. Der Lackfilm wird derart ausgebildet, dass bei einer Bedruckung des Lackfilms mittels wasserbasierten Tintenstrahl-Tinten das Wasser der Tinte nicht schnell genug von dem Lackfilm aufgenommen werden kann und auch das Wasser der Tinte nicht ausreichend schnell verdunstet, sodass eine feuchte Tintenbedeckung des Lackfilms verbleibt. Dadurch wird eine ausreichend schnelle Haftung der Tintendruck-Farbe auf der Lackschicht oft nicht erreicht. Für eine industrielle Anwendung werden Trocknungszeiten von weniger als 0,3 Sekunden gefordert, da nach dieser Zeit der Tintenstrahldruck bei der Bearbeitung in weiteren Prozessschritten bereits wieder mechanisch belastbar sein muss. Ist die Tinte bei der mechanischen Belastung jedoch nicht vollständig getrocknet oder in den Lackfilm eingezogen, kann das Druckbild "verwischen" und wird dadurch oft bis zur Unkenntlichkeit verändert. Codes, wie beispielsweise Bar-Codes oder QR-Codes werden dann oft unleserlich. Daher werden solche Drucke auf Flächen appliziert, die zuvor vom Lack ausgespart wurden. Die Tinte wird dabei auf eine lackfreie Substratoberfläche gedruckt und kann einziehen. Das Aussparen von Bereichen der Substratoberfläche bei der Aufbringung eines Lacks ist jedoch ebenfalls mit prozessualem Aufwand verbunden.

Es wurde in der Vergangenheit versucht, das Substrat, wie beispielsweise Papier oder Karton, für den Tintenstrahldruck gängiger zu machen. Dies kann beispielsweise durch die Behandlung des Papier- oder Kartonmaterials bereits bei der Herstellung mittels sogenannter Leimungs- oder Schlichtemittel erfolgen. Dadurch kann auf der Oberfläche eine Porosität erhalten werden, die einer Bedruckung mittels Tintenstrahldruck zuträglich ist. So offenbart beispielsweise die WO 2011/093896 A1 ein Papier mit einer Oberflächenbehandlung für den Tintenstrahldruck, wobei das Papier mit einer Leimungs- oder Schlichtemittelzusammensetzung umfassend ein nicht-filmbildendes Polymerlatex und ein Metallsalz behandelt wird. Zum einen wird jedoch ein nicht-filmbildendes Material verwendet, was die Anwendung als Überdrucklack ungeeignet macht, und zum anderen wird ein sehr hoher Anteil von 40 bis 60 Gew.-% eines Metallsalzes eingesetzt, wodurch die Zusammensetzung für die Verwendung im direkten Kontakt mit beispielsweise Lebensmitteln oder Pharmazeutika ungeeignet wird, da durch den hohen Anteil an Metallsalz die Lebensmittel oder Pharmazeutika stofflich und geschmacklich beeinträchtigt werden. Bei Kontakt mit Feuchtigkeit kann es zum herauslösen dieser Salze kommen. Aufgrund ihrer Zusammensetzung sind solche Formulierungen aus technischer Sicht nicht in Lackwerken im Offsetdruck applizierbar.

Die Zusammenfassung der JP 2004 204050 offenbart eine wässrige Beschichtungszusammensetzung enthaltend eine filmbildende Harzemulsion, ein wasserlösliches Styrol-Acrylsäureharz, ein wasserlösliches Amin mit einem Siedepunkt im Bereich von 120 bis 400 °C, ein Alkylsulfosuccinat-Alkalimetallsalz und Wasser, wobei das Styrol-Acrylsäureharz ein gewichtsgemitteltes Molekulargewicht im Bereich von 1000 bis 12000 und einen Säurewert von 150 bis 300 mg KOH/g besitzt, zur Verwendung im Rotations-Offset-Druck. Die Verwendung eines nicht-filmbildenden Polystyrolacrylats mit einem T_{G} von > 80 °C wird nicht offenbart.

### Beschreibung der Erfindung

Es besteht daher nach wie vor ein Bedarf an einer Lackzusammensetzung, die als Überdrucklack für die Anwendung auf bedruckten Substraten oder als Primer geeignet ist, und dabei gleichzeitig die weitere Bedruckung mittels Tintenstrahldruck in einem industriellen Verfahren erlaubt und für die Verwendung in der Verpackungsbranche geeignet ist.

Aufgabe der vorliegenden Erfindung ist es somit, die vorstehenden genannten Mängel und Schwierigkeiten zu überwinden und eine wässrige Lackzusammensetzung bereitzustellen, welche eine Vollflächenlackierung ermöglicht und gleichzeitig die Probleme der konventionellen Wasserlacke nicht aufweist.

Überraschenderweise wurde nun herausgefunden, dass diese Aufgabe durch eine wässrige Lackzusammensetzung gemäß Anspruch 1 gelöst wird.

Bevorzugte Ausführungsformen werden in den Unteransprüchen angegeben.

Ein erster Aspekt der vorliegenden Anmeldung betrifft eine wässrige Lackzusammensetzung, umfassend:
- ein nicht-filmbildendes Poly(styrolacrylat) mit einer Glasübergangstemperatur (T_{G}) von mindestens 80 °C,
- ein Poly(styrolacrylat)-Harz mit einem Gewichtsmittelmolekulargewicht (M_{W}) von bis zu 20 000 g/mol, sowie
- Wasser.

Ein weiterer Aspekt der vorliegenden Erfindung betrifft die Verwendung einer Lackzusammensetzung gemäß dem ersten Aspekt zur Herstellung eines mikrostrukturierten Lackfilms auf einem Substrat.

Die Lackzusammensetzung der vorliegenden Erfindung umfasst zumindest ein nicht-filmbildendes Poly(styrolacrylat) mit einer Glasübergangstemperatur (T_{G}) von mindestens 80 °C, ein Poly(styrolacrylat)-Harz mit einem Gewichtsmittelmolekulargewicht (M_{W}) von bis zu 20 000 g/mol, sowie Wasser.

Der Grundgedanke der Erfindung basiert auf der Bereitstellung einer Lackzusammensetzung, welche bei der Anwendung auf ein Substrat nach der Trocknung der Lackzusammensetzung einen mikrostrukturierten Lackfilm zur Folge hat.

Der Lackfilm ist so strukturiert, dass sich unzählige kleine Risse bilden. In einer bevorzugten Ausführungsform sind diese Risse höchstens 2 µm, weiter bevorzugt höchstens 1 µm breit. Weiter bevorzugt können die Risse eine Breite von 0,5 bis 1 µm aufweisen. Die Länge der Risse beträgt bevorzugt von 5 bis 50 µm Wenn dieser so ausgebildete Lackfilm mit wasserbasierter Tinte bedruckt wird, füllen sich diese Risse mit der Tinte und ein großer Teil der Tinte wird dem darunterliegenden Substrat "zugeführt".

Ohne an irgendeine Theorie gebunden sein zu wollen, wird angenommen, dass diese gezielt erzeugten Risse mehrere Funktionen erfüllen. Zum einen können die Risse die aufgebrachte Tinte zur Substratoberfläche durchleiten. An der Substratoberfläche kann die Tinte dann beispielsweise mittels Kapillarwirkung in das Substrat aufgenommen werden. Außerdem wird weitere Tinte von den Rissen selbst aufgenommen. Durch das schnelle Einbinden der Tinte in eine feste Lackmatrix und nicht auf der Oberfläche eines geschlossenen Lackfilms kann eine "trockene" Oberfläche erzeugt werden. Das beim herkömmlichen Auftragen auf eine geschlossene Lackfilmoberfläche notwendige schnelle Verdunsten des Lösungsmittels der Tinte ist nicht mehr erforderlich. Ein weiterer Vorteil des mittels der vorliegenden Lackzusammensetzung erzeugten Lackfilms ist, dass die Tintenstrahl-Tinte den Lackfilm teilweise unterwandert und somit durch den Lackfilm geschützt wird. Als Resultat wird eine mechanische Belastung des Druckbildes sehr schnell möglich.

Damit ein durchgängiger Lackfilm auf der gegebenenfalls bedruckten Substratoberfläche entsteht, muss die Lackzusammensetzung eine filmbildende Lackzusammensetzung sein. In einer bevorzugten Ausführungsform beträgt die Mindestfilmtemperatur (MFT, auch als Mindestfilmbildetemperatur bezeichnet, minimum film forming temperature, MFFT) mindestens 50 °C, bevorzugt mindestens 60 °C, weiter bevorzugt mindestens 65 °C und besonders bevorzugt liegt die MFT im Bereich von 67 °C bis 85 °C.

Unter der Mindestfilmbildetemperatur (MFT) versteht man die niedrigste Temperatur, bei der eine dünne Schicht einer Kunststoffdispersion noch zu einem zusammenhängenden Film auftrocknet. Für die Zwecke der vorliegenden Anmeldung wird die MFT durch die sogenannte MFT-Bank bestimmt nach DIN ISO 2155 (in der Fassung vom April 2001).

Ein weiterer wichtiger Parameter der verwendeten Polymerdispersionen, Polymerharze sowie der erfindungsgemäßen (getrockneten) Lackzusammensetzung ist die Glasübergangstemperatur (T_{G}). Die Glasübergangs- oder Erweichungstemperatur (T_{G}) ist die Temperatur, bei der eine Substanz (Glas) die größte Änderung der Verformungsfähigkeit aufweist. Für die Zwecke der vorliegenden Anmeldung wird die T_{G} nach DIN 51007 (in der Fassung vom Juni 1994) bestimmt.

In der vorliegenden Erfindung wird das Poly(styrolacrylat)-Harz mittels des Gewichtsmittelmolekulargewichts (M_{W}) charakterisiert. Für die Zwecke der vorliegenden Anmeldung kann das Gewichtsmittelmolekulargewichts (M_{W}) durch Gel-Permeations-Chromatographie (GPC) nach ISO 16014-4 2003 bestimmt werden.

Es wird angenommen, dass die Rissbildung des Lackfilms auf dem Verhältnis und der Art von Polymerharz und Polymerdispersion basiert, insbesondere den verwendeten Polymerdispersionen und deren Mischungen.

In der Lackzusammensetzung gemäß der vorliegenden Anmeldung wird ein nicht-filmbildendes Poly(styrolacrylat) verwendet. Bevorzugt handelt es sich dabei um eine wässrige Dispersion eines nicht-filmbildendes Poly(styrolacrylat)s. Die erfindungsgemäß verwendeten Poly(styrolacrylat)e werden aus der Copolymerisation oder Pfropf-Polymerisation von Styrol oder α-Methyl-Styrol mit Acrylsäure oder Methacrylsäure und/oder jeweils deren Estern, wie beispielsweise Acrylsäuremethyl-oder -ethylester, gebildet. Styrol oder α-Methyl-Styrol können sowohl allein als auch im Gemisch verwendet werden. Ebenso können Acrylsäure, Methacrylsäure und die jeweiligen Ester allein oder im Gemisch eingesetzt werden. Alternativ oder zusätzlich zu Acrylsäure können auch Maleinsäure oder Maleinsäureanhydrid verwendet werden. Solche Polymerdispersionen können durch verschiedene Polymerisationsverfahren (z. B. Emulsionspolymerisation, Suspensionspolymerisation) direkt aus den Monomeren oder auch durch Dispergieren eines Polymeren hergestellt werden.

Gemäß einer bevorzugten Ausführungsform des ersten Aspekts weist das nicht-filmbildende Poly(styrolacrylat) eine Glasübergangstemperatur (T_{G}) von mindestens 80 °C, bevorzugt von mindestens 90 °C, weiter bevorzugt von mindestens 95 °C, und am bevorzugtesten von mindestens 100 °C auf.

Als weiterer essentieller Bestandteil der Lackzusammensetzung der vorliegenden Erfindung findet ein Poly(styrolacrylat)-Harz Verwendung. Bevorzugt handelt sich dabei um ein Harz mit einem Molekulargewicht M_{W} dergestalt, dass das Harz, gegebenenfalls nach Neutralisation beispielsweise mittels einer Base, wie Ammoniak, Aminen, KOH, NaOH und ähnliche Basen, in Wasser gelöst werden kann. Das Poly(styrolacrylat)-Harz kann in einer Massepolymerisation (bulk polymerization) aus Styrol und Acrylsäure hergestellt werden und anschließend gegebenenfalls neutralisiert werden. Neben Styrol kann auch α-Methyl-Styrol mit Acrylsäure oder Methacrylsäure und den jeweiligen Estern, wie beispielsweise Acrylsäuremethyl- oder -ethylester, zu einem Poly(styrolacrylat)-Harz polymerisiert werden. Styrol oder α-Methyl-Styrol können sowohl allein als auch im Gemisch verwendet werden. Ebenso können Acrylsäure, Methacrylsäure und die jeweiligen Ester allein oder im Gemisch eingesetzt werden. Alternativ oder zusätzlich zu Acrylsäure können auch Maleinsäure oder Maleinsäureanhydrid verwendet werden. Das Poly(styrolacrylat)-Harz der vorliegenden Erfindung kann beispielsweise eine Säurezahl im Bereich von 200 bis 300, bevorzugt von 210 bis 250 aufweisen. Als Säurezahl bezeichnet man die Menge an Kaliumhydroxid in mg, die notwendig ist, um die in 1 g Poly(styrolacrylat)-Harz enthaltenen freien Fettsäuren zu neutralisieren. Die Säurezahl ist ein Maß für die Anzahl an Carbonsäuregruppen in dem Poly(styrolacrylat)-Harz.

In einer bevorzugten Ausführungsform des ersten Aspekts der vorliegenden Erfindung weist das Poly(styrolacrylat)-Harz ein Gewichtsmittelmolekulargewicht (M_{W}) von bis zu 10 000 g/mol, bevorzugt von bis zu 5 000 g/mol, besonders bevorzugt von bis zu 2 000 g/mol auf.

Gemäß einer anderen bevorzugten Ausführungsform des ersten Aspekts weist das Poly(styrolacrylat)-Harz eine Glasübergangstemperatur (T_{G}) von mindestens 55 °C auf.

Das Verhältnis der beiden Hauptbestandteile der erfindungsgemäßen Zusammensetzung ist frei variabel. Gemäß einer bevorzugten Ausführungsform des ersten Aspekts liegt das Verhältnis von nicht-filmbildendem Poly(styrolacrylat) zu Poly(styrolacrylat)-Harz, jeweils bezogen auf die Masse der Feststoffe, im Bereich von 5:1 bis 1:1, bevorzugt im Bereich von 4:1 bis 1,2:1, weiter bevorzugt im Bereich von 3:1 bis 1,5:1 vorliegt, und besonders bevorzugt beträgt das Verhältnis etwa 3:1 oder etwa 2:1.

Neben den beiden polymeren Hauptbestandteilen eines nicht-filmbildenden Poly(styrolacrylat)s und eines Poly(styrolacrylat)-Harzes kann die wässrige Lackzusammensetzung der vorliegenden Erfindung auch einen Vernetzer, bevorzugt einen anorganischen Vernetzer, enthalten. Bevorzugt wird der Vernetzer in einer Lösung, beispielsweise einer wässrigen Lösung, zugegeben. Dabei kann die Konzentration des Vernetzers in der Lösung im Bereich von 10 bis 50 Gew.-%, bevorzugt im Bereich von 15 bis 30 Gew.-%, besonders bevorzugt bei etwa 20 Gew.-% liegen. Die Menge an Vernetzer in der Lackzusammensetzung kann bevorzugt im Bereich von 0,1 bis 5, weiter bevorzugt im Bereich von 0,5 bis 2 Gew.-% liegen, jeweils bezogen auf das Gesamtgewicht der wässrigen Lackzusammensetzung.

In einer bevorzugten Ausführungsform der vorliegenden Erfindung umfasst der Vernetzer Zinkammoniumcarbonat.

In einer anderen bevorzugten Ausführungsform der vorliegenden Erfindung umfasst die Lackzusammensetzung gemäß dem ersten Aspekt ein hydrophobes Dispergiermittel. Besonders bevorzugt umfasst das hydrophobe Dispergiermittel das Salz einer Polycarbonsäure, vorzugsweise ein Ammoniumsalz. Das Dispergiermittel kann bevorzugt als Lösung verwendet werden. Dabei kann die Konzentration des Dispergiermittels in der Lösung im Bereich von 10 bis 50 Gew.-%, bevorzugt im Bereich von 15 bis 30 Gew.-%, besonders bevorzugt bei etwa 20 Gew.-% liegen. Die Menge an Dispergiermittel in der Lackzusammensetzung kann bevorzugt im Bereich von 0,1 bis 5, weiter bevorzugt im Bereich von 2 bis 3 Gew.-% liegen, jeweils bezogen auf das Gesamtgewicht der wässrigen Lackzusammensetzung.

Die Menge weiterer Salze, wie etwa anorganischer Salze, insbesondere anorganischer Metallsalze, in der Lackzusammensetzung der vorliegenden Erfindung beträgt bevorzugt weniger als 10 Gew.-%, weiter bevorzugt weniger als 5 Gew.-%, und noch weiter bevorzugt weniger als 2 Gew.-%, jeweils bezogen auf das Gesamtgewicht der wässrigen Lackzusammensetzung.

Darüber hinaus kann die Lackzusammensetzung der vorliegenden Erfindung weitere übliche Zusatzstoffe enthalten. In einer bevorzugten Ausführungsform der vorliegenden Erfindung umfasst die Lackzusammensetzung ferner mindestens einen Zusatzstoff ausgewählt aus Wachs, Netzmittel, Entschäumer, Base, Verzögerungsadditiv und Koaleszenzmittel.

Beispielsweise kann die Mindestfilmtemperatur einer Lackzusammensetzung durch Zugabe von Koaleszenzmittelen, wie z.B. Glycolether oder Netzmittel, verringert werden. Die Scheuerfestigkeit des getrockneten Lackfilms kann beispielsweise mittels einer Wachszugabe beeinflusst werden. Die Trocknung des Lackfilms in der Maschine kann durch Verzögerungsadditive, wie beispielsweise Glycerin, beeinflusst werden.

Der Glanz eines aufgebrachten Lackfilms kann durch Zugabe von Mattierungsmitteln gesteuert werden. Daher umfasst die Lackzusammensetzung der vorliegenden Erfindung als weiteren Bestandteil in einer bevorzugten Ausführung ein Mattierungsmittel, wie beispielsweise Silica. Das Mattierungsmittel kann in der Lackzusammensetzung bevorzugt in einer Menge von bis zu 10 Gew.-%, weiter bevorzugt im Bereich von 1 bis 4 Gew.-%, jeweils bezogen auf das Gesamtgewicht der wässrigen Lackzusammensetzung, verwendet werden.

Der Mattierungsgrad kann auch durch Zugabe von Polyurethan-Dispersionen beeinflusst werden. Es entsteht eine Trübung der Lackoberfläche. Vorzugsweise wird eine Polyurethan-Dispersion bis maximal 20% (bevorzugt bis 10%) eingesetzt. Als Polyurethan-Dispersion kann beispielsweise Neorez^{®} 1010 bis maximal 20% (bevorzugt bis 10%) verwendet werden.

Die wässrige Lackzusammensetzung der vorliegenden Erfindung kann als graphischer Überdrucklack ("Overprint Varnish", OPV) verwendet werden. Die Lackzusammensetzungen der vorliegenden Erfindung sind aber auch als Primer (Grundierung) vor Auftrag einer Druckfarbe einsetzbar, wobei sie grundsätzlich in den unterschiedlichsten Drucktechniken (Flexo-Druck, Tiefdruck, Rollen-/ BogenOffset, und ähnliche) Anwendung finden können. Die erfindungsgemäßen wasserbasierten Lacksysteme können daher neben den genannten konventionellen Druckprozessen auch im Digitaldruck, beispielsweise in Tintenstrahldruck-Verfahren, sowohl als Überdrucklack aber auch als Primer vorteilhaft eingesetzt werden.

Eine bevorzugte Lackzusammensetzung gemäß dem ersten Aspekt der vorliegenden Erfindung umfasst:
- 45 bis 65 Gew.-% des nicht-filmbildenden Poly(styrolacrylat)s mit einer Glasübergangstemperatur (T_{G}) von mindestens 100 °C (DSC) in Form einer wässrigen Dispersion,
- 8 bis 12 Gew.-% des Poly(styrolacrylat-Harzes mit einem Gewichtsmittelmolekulargewicht (M_{W}) von bis zu 5 000 g/mol in Form eines neutralisierten Feststoffs,
- 5 bis 7 Gew.-% des anorganischen Vernetzers in Lösung,
- 4 bis 7 Gew.-% einer Polyethylenwachsemulsion mit 32 Gew.% Feststoffgehalt,
- 1 bis 3 Gew.-% Glyzerin,
- 0,1 bis 2 Gew.-% Netzmittel,
- 0,1 bis 1 Gew.-% Siliconentschäumer,
- Ammoniak, und
- Wasser, wobei die Summe der Anteile sich zu 100 Gew.-% addieren.

Eine besonders bevorzugte Lackzusammensetzung gemäß dem ersten Aspekt der vorliegenden Erfindung umfasst:
- 45 bis 65 Gew.-% des nicht-filmbildenden Poly(styrolacrylat)s mit einer Glasübergangstemperatur (T_{G}) von mindestens 100 °C (DSC) in Form einer wässrigen Dispersion,
- 8 bis 12 Gew.-% des Poly(styrolacrylat-Harzes mit einem Gewichtsmittelmolekulargewicht (M_{W}) von bis zu 5 000 g/mol in Form eines neutralisierten Feststoffs,
- 8 bis 14 Gew.-%, bevorzugt 10 bis 14 Gew.-% eines hydrophoben Dispergiermittels,
- 5 bis 7 Gew.-% des anorganischen Vernetzers in Lösung,
- 4 bis 7 Gew.-% einer Polyethylenwachsemulsion mit 32 Gew.% Feststoffgehalt,
- 1 bis 3 Gew.-% Glyzerin,
- 0,1 bis 2 Gew.-% Netzmittel,
- 0,1 bis 1 Gew.-% Siliconentschäumer,
- Ammoniak, und
- Wasser, wobei die Summe der Anteile sich zu 100 Gew.-% addieren.

Ein zweiter Aspekt der vorliegenden Erfindung betrifft die Verwendung einer Lackzusammensetzung gemäß dem ersten Aspekt der vorliegenden Erfindung zur Herstellung eines mikrostrukturierten Lackfilms auf einem Substrat.

Als Substrat eignet sich unter anderem Papier, Karton und Pappe, wie beispielsweise beschichtetes und unbeschichtetes oder bedrucktes Papier oder Pappe, oder Folie. Bevorzugt als Substrat wird bedrucktes oder unbedrucktes Papier oder bedruckter oder unbedruckter Karton verwendet. Insbesondere eignen sich alle Materialien zur Herstellung von Kartonverpackungen und flexiblen Verpackungen, alle Materialien zur Herstellung von Akzidenzen (Broschüren, Werbung), Faltschachteln, Etiketten, Sackverpackungen, Runddosen, Umverpackungen, Sleeves, Abzieh-Etiketten, sowie Verbund- und Schicht-Materialien.

In einer bevorzugten Ausführungsform des zweiten Aspekts weist der mikrostrukturierte Lackfilm eine Vielzahl von Rissen mit einer Breite von höchstens 2 µm auf.

In einer anderen bevorzugten Ausführungsform des zweiten Aspekts wird die Lackzusammensetzung als Primer (Grundierung) und/oder Überdrucklack auf Substraten wie Papier oder Karton verwendet.

Insbesondere weist die nicht filmbildende Dispersion eine T_{G} von mindestens 80 °C auf. Diese Dispersion wird durch Zumischen von anderen Rohstoffen modifiziert, dass die im Lackfilm resultierende MFT gerade so nach unten gesetzt wird, dass eine grundsätzliche Annäherung der Polymere möglich ist, aber eine flächig vollständige "Verschmelzung" zu einem signifikanten Anteil über Ausbildung von räumlich getrennten "Inseln" durch Rissbildung ausgeschlossen wird. Durch die Modifikation wird ebenfalls gutes Laufverhalten im Lackaggregat gesichert und die spätere Mindestwasserbeständigkeit gewährleistet.

Die Lackzusammensetzung der vorliegenden Erfindung offenbart vielfältige Vorteile. Wenn die Lackzusammensetzung beispielsweise auf nicht gestrichene Papieren aufgetragen wird, werden insbesondere farbintensive Tintenstrahl-Tinten sehr schnell aufgenommen. Es entsteht eine Art von "Löschblatt-Effekt" und die Druckfarbe schlägt durch.

Wird dagegen beispielsweise ein gestrichener Karton mit der erfindungsgemäßen Lackzusammensetzung lackiert und anschließend nach dem Trocknen mit niedrigviskosen Lösemittel-Tiefdruckfarben bedruckt, erhöht sich der Glanz, z.B. von ca. 40 Glanzpunkte auf 60 Glanzpunkte. Die Druckfarbe wird in der Lackmatrix gehalten und ist abriebfest.

Durch die Verwendung der erfindungsgemäßen Lackzusammensetzung werden neue Anwendungstechniken erschlossen. So können beispielsweise Faltschachteln vollflächig mit der erfindungsgemäßen Lackzusammensetzung lackiert werden und anschließend beispielsweise mittels Tintenstrahldruck bedruckt und auch ohne Probleme verklebt werden. Aussparungen für Druckfelder oder Klebeflächen sind aufgrund der Eigenschaften des Lackfilms nicht notwendig. Das Anfertigen und Wechseln von Lackplatten entfällt, wodurch Einsparungen von Material und Rüstzeiten im Offset-Druck möglich sind. Das später zu bedruckende Feld für beispielsweise eine Codierung kann jederzeit frei gewählt werden. Es ist nicht notwendig, wie herkömmlicherweise üblich, vorher einen zu bedruckenden Bereich auszuwählen.

Durch die erfindungsgemäße Lackzusammensetzung können auch Grundierungen für Substrate zur Verfügung gestellt werden, wodurch, beispielsweise mit Hilfe des oben erwähnten "Löschblatt-Effekts", anschließend Sicherheitskennzeichnungen, wie z.B. Wasserzeichen, appliziert werden können.

Ebenfalls durch die Verwendung der erfindungsgemäßen Lackzusammensetzung als Grundierung können Substratoberflächen in der Qualität verbessert werden, wodurch die anschließende Bedruckung brillanter erscheint und abriebfester ist.

Für bekannte Druckverfahren ist damit ein Lack, der als Primer bereits vor dem Druckprozess aufgetragen wird, in der Lage, als OPV zu wirken und die entsprechenden Eigenschaft im Endprodukt zu erzielen, obwohl es nach dem Auftrag des Druckmittels zu keiner weiteren Beschichtung kommt.

Die vorliegend beschriebene Erfindung wird im Folgenden weiter durch das beigefügte Beispiel erläutert.

### Beispiel 1:

Folgende Komponenten wurden in ihrer jeweiligen Menge zusammengerührt.

| Komponente | Menge (Gew.-%) |
|---|---|
| Induprint SE 385 der Indulor Chemie GmbH (nicht-filmbildende Dispersion, T_{G} 107 °C) | 60 |
| Joncryl 678 der BASF SE (M_{W} ca. 8500 g/mol / Säurezahl 216 / T_{G} 101 °C) | 10 |
| Ammoniak | 2,4 |
| Zinkammoniumcarbonat-Lösung (20%ig) | 6 |
| Ultralube E 842 D (PE-Wachs Emulsion, 32%ig) | 6 |
| Aerosol^{®} OT-85 AE von Cytec (Netzmittel) | 1 |
| Glycerin (Verzögerer) | 2,84 |
| BYK^{®} 019 der Byk Chemie (Silikonentschäumer) | 0,34 |
| Wasser | 11,42 |

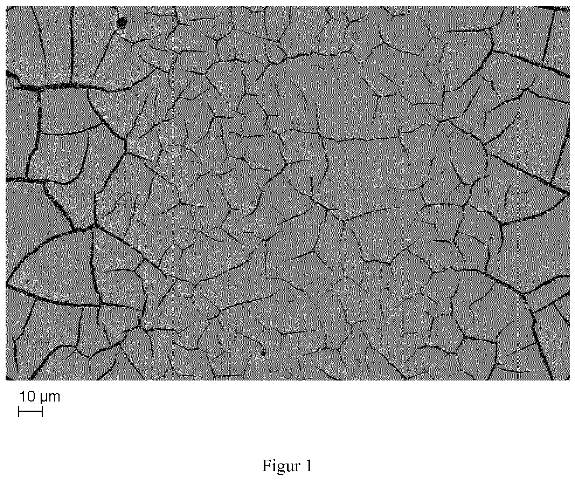

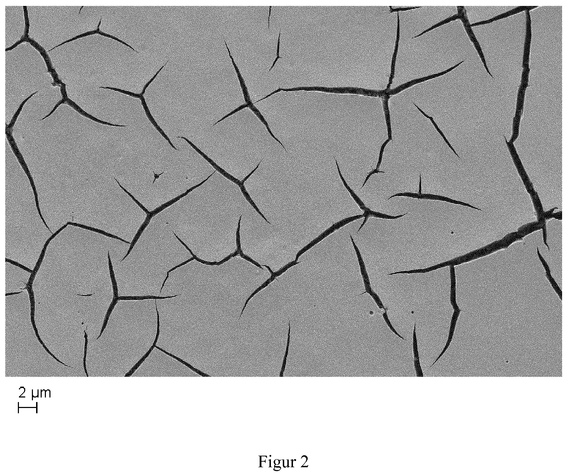

Durch die gewählte Formulierung entsteht ein getrockneter Lackfilm mit Riss-Struktur, wie auch aus Figuren 1 und 2 ersichtlich ist. Die obige Formulierung konnte ohne Probleme in einem Lackierwerk verarbeitet werden.

Figuren 1 und 2 zeigen jeweils eine Mikroskopaufhahme eines Lackfilms der vorliegenden Erfindung (Beispiel 1) in einer 500-fachen (Figur 1) und einer 2 000-fachen (Figur 2) Vergrößerung. Deutlich ist die Ausbildung einer Riss-Struktur auf der Oberfläche ersichtlich. Die Risse zeigen eine durchschnittliche Länge von ca. 5 bis 50 µm und eine durchschnittliche Breite im Bereich von 0,5 bis 1 µm.

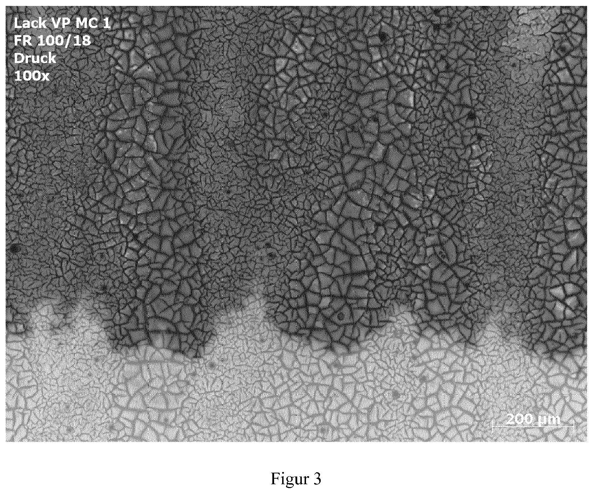

Aus Figur 3 wird ersichtlich, dass die Tinte beim Bedrucken eines Lackfilms, hergestellt nach Beispiel 1 oben, die Tinte in die Risse eindringt und damit eine gleichmäßige Einfärbung der Oberfläche ermöglicht.

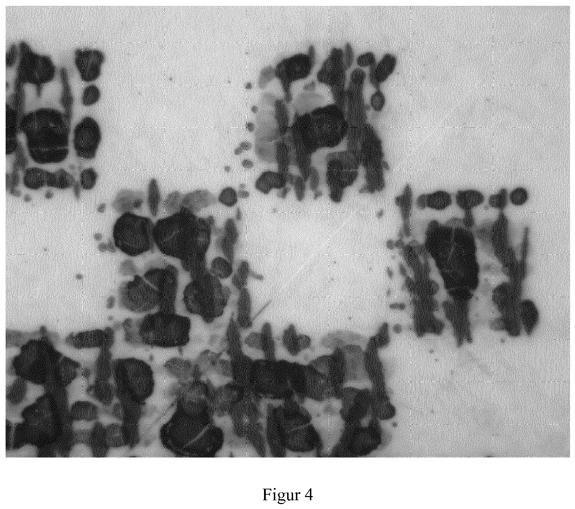

Weiter verdeutlicht wird diese Eigenschaft beim Vergleich mit einem herkömmlichen Überdrucklack. Figur 4 zeigt (90-fache Vergrößerung) einen Ausschnitt aus einem QR-Code, aufgedruckt auf einen herkömmlichen Überdrucklack mittels Tintenstrahldruck. Wie aus der Figur 4 ersichtlich ist, wird keine gleichmäßige Oberflächenbedeckung der Farbe erreicht. Vielmehr bilden sich Tinten-Tröpfchen auf dem Lackfilm, die anschließend ungleichmäßig trocken. Neben der längeren Trocknungszeit auf einem herkömmlichen Lackfilm entsteht auch ein ungleichmäßiges Druckbild.

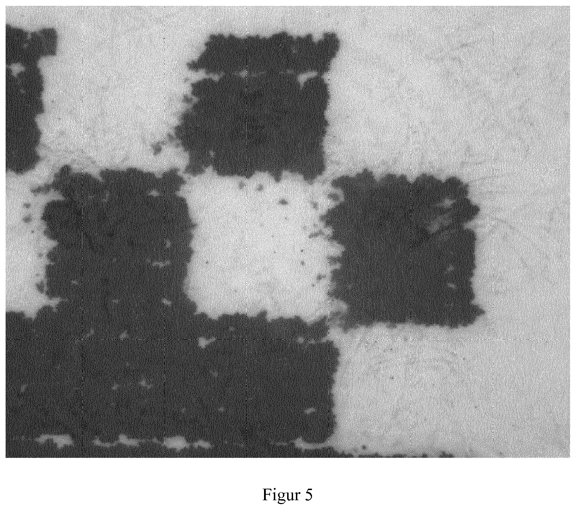

Dagegen zeigt Figur 5 den gleichen Ausschnitt eines Tintenstrahl-Druckbildes eines QR-Codes auf einem Lackfilm gemäß Beispiel 1. Die gleichmäßigere Bedeckung der Oberfläche mit der Tintenstrahl-Tinte ermöglicht eine bessere Lesbarkeit des Druckbildes, und damit des QR-Codes. Diese resultiert aus dem Eindringen der Tinte in die Risse an der Oberfläche des Lackfilms und die Einleitung der Tinte in das darunter liegende Substrat, sofern dieses saugfähig ist.

### Beispiel 2:

Folgende Komponenten wurden in ihrer jeweiligen Menge zusammengerührt.

| Komponente | Menge (Gew.-%) |
|---|---|
| Induprint SE 385 der Indulor Chemie GmbH (nicht-filmbildende Dispersion, T_{G} 107 °C) | 47,0 |
| Indurez SR 10 der Indulor Chemie GmbH (M_{W} ca. 6.000 - 8.000 g/mol / Säurezahl 215 - 230 / T_{G} 105 °C) | 8,0 |
| Ammoniak | 1,8 |
| Zinkammoniumcarbonat-Lösung (20%ig) | 5,0 |
| Orotan^{®} 731 AER von Rohm&Haas (Hydrophobes Dispersant) | 11,0 |
| Aquacer^{®} 3RC 7999 der Byk Cera | 5,0 |
| (PE-Wachs Emulsion, 32%ig) | |
| Aerosol^{®} OT-85 AE von Cytec (Netzmittel) | 1,0 |
| Glycerin (Verzögerer) | 2,5 |
| BYK^{®} 019 der Byk Chemie (Silikonentschäumer) | 0,3 |
| Wasser | 18,4 |

Durch die gewählte Formulierung entsteht ein getrockneter Lackfilm mit Riss-Struktur, ähnlich wie auch aus Figuren 1 und 2 ersichtlich ist. Die obige Formulierung konnte ohne Probleme in einem Lackierwerk verarbeitet werden und anschließend, analog zu Beispiel 1, mittels Tintenstrahldruck bedruckt werden.

### Beispiel 3:

Folgende Komponenten wurden in ihrer jeweiligen Menge zusammengerührt.

| Komponente | Menge (Gew.-%) |
|---|---|
| Induprint SE 385 der Indulor Chemie GmbH (nicht-filmbildende Dispersion, T_{G} 107 °C) | 53,0 |
| Indurez SR 10 der Indulor Chemie GmbH (M_{W} ca. 6.000 - 8.000 g/mol / Säurezahl 215 - 230 / T_{G} 105 °C) | 8,0 |
| Ammoniak | 2,0 |
| Zinkammoniumcarbonat-Lösung (20%ig) | 6,0 |
| Aquacer^{®} 3RC 7999 der Byk Cera (PE-Wachs Emulsion, 32%ig) | 6,0 |
| Aerosol^{®} OT-85 AE von Cytec (Netzmittel) | 1,0 |
| Glycerin (Verzögerer) | 2,8 |
| BYK^{®} 019 der Byk Chemie (Silikonentschäumer) | 0,3 |
| Wasser | 20,9 |

Durch die gewählte Formulierung entsteht ein getrockneter Lackfilm mit Riss-Struktur, ähnlich wie auch aus Figuren 1 und 2 ersichtlich ist. Die obige Formulierung konnte ohne Probleme in einem Lackierwerk verarbeitet werden und anschließend, analog zu Beispiel 1, mittels Tintenstrahldruck bedruckt werden.

### Beispiel 4:

Folgende Komponenten wurden in ihrer jeweiligen Menge zusammengerührt.

| Komponente | Menge (Gew.-%) |
|---|---|
| Induprint SE 371 der Indulor Chemie GmbH (nicht-filmbildende Dispersion, T_{G} 101 °C) | 60 |
| Indurez SR 30 der Indulor Chemie GmbH (M_{W} ca. 2.500 - 3.500 g/mol / Säurezahl 240 - 260 / T_{G} 72 °C) | 8 |
| Ammoniak | 1,8 |
| Zinkammoniumcarbonat-Lösung (20%ig) | 5,0 |
| Orotan^{®} 731 AER von Rohm&Haas (Hydrophobes Dispersant) | 8,0 |
| Aquacer^{®} 3RC 7999 der Byk Cera (PE-Wachs Emulsion, 32%ig) | 5,0 |
| Aerosol^{®} OT-85 AE von Cytec (Netzmittel) | 1,0 |
| Glycerin (Verzögerer) | 1,0 |
| BYK^{®} 019 der Byk Chemie (Silikonentschäumer) | 0,3 |
| Wasser | 9,9 |

Durch die gewählte Formulierung entsteht ein getrockneter Lackfilm mit Riss-Struktur, ähnlich wie auch aus Figuren 1 und 2 ersichtlich ist. Die obige Formulierung konnte ohne Probleme in einem Lackierwerk verarbeitet werden und anschließend, analog zu Beispiel 1, mittels Tintenstrahldruck bedruckt werden.

## Patentansprüche

1. Wässrige Lackzusammensetzung, umfassend:
- ein nicht-filmbildendes Poly(styrolacrylat) mit einer Glasübergangstemperatur (T_{G}) von mindestens 80 °C,
- ein Poly(styrolacrylat)-Harz mit einem Gewichtsmittelmolekulargewicht (M_{W}) von bis zu 20 000 g/mol, sowie
- Wasser.

2. Lackzusammensetzung nach Anspruch 1, wobei das nicht-filmbildende Poly(styrolacrylat) eine Glasübergangstemperatur (T_{G}) von mindestens 80 °C, bevorzugt von mindestens 90 °C, weiter bevorzugt von mindestens 95 °C, und am bevorzugtesten von mindestens 100 °C aufweist.

3. Lackzusammensetzung nach Anspruch 1 oder 2, wobei das Poly(styrolacrylat)-Harz ein Gewichtsmittelmolekulargewicht (M_{W}) von bis zu 10 000 g/mol, bevorzugt von bis zu 5 000 g/mol, besonders bevorzugt von bis zu 2 000 g/mol aufweist.

4. Lackzusammensetzung nach einem der vorhergehenden Ansprüche, wobei das Poly(styrolacrylat)-Harz eine Glasübergangstemperatur (T_{G}) von mindestens 55 °C aufweist.

5. Lackzusammensetzung nach einem der vorhergehenden Ansprüche, wobei das Verhältnis von nicht-filmbildendem Poly(styrolacrylat) zu Poly(styrolacrylat)-Harz, jeweils bezogen auf die Masse der Feststoffe, im Bereich von 5:1 bis 1:1, bevorzugt im Bereich von 4:1 bis 1,2:1, weiter bevorzugt im Bereich von 3:1 bis 1,5:1 vorliegt, und besonders bevorzugt etwa 2:1 beträgt.

6. Lackzusammensetzung nach einem der vorhergehenden Ansprüche ferner umfassend ein hydrophobes Dispergiermittel, wobei das hydrophobe Dispergiermittel das Salz einer Polycarbonsäure, vorzugsweise ein Ammoniumsalz, umfasst.

7. Lackzusammensetzung nach einem der vorhergehenden Ansprüche ferner umfassend einen Vernetzer, bevorzugt einen anorganischen Vernetzer.

8. Lackzusammensetzung nach Anspruch 7, wobei der anorganische Vernetzer Zinkammoniumcarbonat umfasst.

9. Lackzusammensetzung nach einem der vorhergehenden Ansprüche, ferner umfassend mindestens einen Zusatzstoff ausgewählt aus Wachs, Netzmittel, Entschäumer, Base und Verzögerungsadditiv, Koaleszenzmittel.

10. Lackzusammensetzung nach einem der vorhergehenden Ansprüche, umfassend:
- 45 bis 65 Gew.-% des nicht-filmbildenden Poly(styrolacrylat)s mit einer Glasübergangstemperatur (T_{G}) von mindestens 100 °C (DSC) in Form einer wässrigen Dispersion,
- 8 bis 12 Gew.-% des Poly(styrolacrylat-Harzes mit einem Gewichtsmittelmolekulargewicht (M_{W}) von bis zu 5 000 g/mol in Form eines neutralisierten Feststoffs,
- 10 bis 14 Gew.-% eines hydrophoben Dispergiermittels,
- 5 bis 7 Gew.-% des anorganischen Vernetzers in Lösung,
- 4 bis 7 Gew.-% einer Polyethylenwachsemulsion mit 32 Gew.% Feststoffgehalt,
- 1 bis 3 Gew.-% Glyzerin,
- 0,1 bis 2 Gew.-% Netzmittel,
- 0,1 bis 1 Gew.-% Siliconentschäumer,
- Ammoniak, und
- Wasser, wobei die Summe der Anteile sich zu 100 Gew.-% addieren.

11. Verwendung einer Lackzusammensetzung nach einem der vorhergehenden Ansprüche zur Herstellung eines mikrostrukturierten Lackfilms auf einem Substrat.

12. Verwendung nach Anspruch 11, wobei der mikrostrukturierte Lackfilm eine Vielzahl von Rissen mit einer Breite von höchstens 2 µm aufweist.

13. Verwendung nach Anspruch 11 oder 12 als Primer und/oder Überdrucklack auf Substraten wie Papier, Karton, Pappe oder Folie.

## Claims

1. A waterborne paint composition, comprising:
- a non-film-forming poly(styrene acrylate) having a glass transition temperature (T_{G}) of at least 80 °C,
- a poly(styrene acrylate) resin having a weight average molecular weight (Mw) of up to 20 000 g/mol, and
- water.

2. The paint composition according to claim 1, wherein the non-film-forming poly(styrene acrylate) has a glass transition temperature (T_{G}) of at least 80 °C, preferably of at least 90 °C, more preferably of at least 95 °C, and in particular of at least 100° C.

3. The paint composition according to claim 1 or 2, wherein the poly(styrene acrylate) resin has a weight average molecular weight (Mw) of up to 10 000 g/mol, preferably of up to 5 000 g/mol, particularly preferred of up to 2 000 g/mol.

4. The paint composition according to any one of the preceding claims, wherein the poly(styrene acrylate) resin has a glass transition temperature (T_{G}) of at least 55 °C.

5. The paint composition according to any one of the preceding claims, wherein the ratio of non-film-forming poly(styrene acrylate) to poly(styrene acrylate) resin, each based on the weight of solids, is in the range of from 5:1 to 1:1, preferably in the range of from 4:1 to 1.2:1, more preferably in the range of from 3:1 to 1.5:1, and particularly preferred about 2:1.

6. The paint composition according to any one of the preceding claims, further comprising a hydrophobic dispersing agent, wherein the hydrophobic dispersing agent comprises the salt of a polycarboxylic acid, preferably an ammonium salt,.

7. The paint composition according to any one of the preceding claims, further comprising a cross-linking agent, preferably an inorganic cross-linking agent.

8. The paint composition according to claim 7, wherein the inorganic cross-linking agent comprises ammonium zinc carbonate.

9. The paint composition according to any one of the preceding claims, further comprising at least one additive selected from wax, surfactant, defoamer, base and retarder, coalescing agent.

10. The paint composition according to any one of the preceding claims, comprising:
- 45 to 65 wt.-% of the non-film-forming poly(styrene acrylate) having a glass transition temperature (T_{G}) of at least 100 °C (DSC) in the form of an aqueous dispersion,
- 8 to 12 wt.-% of the poly(styrene acrylate) resin having a weight average molecular weight (Mw) of up to 5 000 g/mol in the form of a neutralized solid,
- 10 to 14 wt.-% of a hydrophobic dispersing agent,
- 5 to 7 wt.-% of the inorganic cross-linking agent in solution,
- 4 to 7 wt.-% of an emulsion of polyethylene wax having an amount of 32 wt.-% solids contents,
- 1 to 3 wt.-% of glycerol,
- 0.1 to 2 wt.-% of surfactant,
- 0.1 to 1 wt.-% of a silicone defoamer,
- ammonia, and
- water, wherein the percentages add to a total of 100 wt.-%.

11. Use of a paint composition according to any one of the preceding claims for the preparation of a microstructured paint film on a substrate.

12. The use according to claim 11, wherein the microstructured paint film has numerous cracks having a width of at most 2 µm.

13. The use according to claim 11 or 12 for a primer and/or overprint varnish on substrates such as paper, cardboard, paperboard or sheet.

## Revendications

1. Composition aqueuse de peinture, renfermant:
- un polystyrène acrylate non filmogène, d'une température de transition vitreuse (T_{G}) d'au moins 80 °C,
- une résine de polystyrène acrylate d'un poids moléculaire moyen (Mw) de jusqu'à 20 000 g/mol, ainsi que
- de l'eau.

2. Composition de peinture selon la revendication 1, le polystyrène acrylate non filmogène présentant une température de transition vitreuse (T_{G}) d'au moins 80 °C, de préférence d'au moins 90 °C, préférentiellement d'au moins 95 °C, et le plus préférentiellement d'au moins 100 °C.

3. Composition de peinture selon l'une des revendications 1 et 2, la résine de polystyrène acrylate présentant un poids moléculaire moyen (Mw) de jusqu'à 10 000 g/mol, de préférence de jusqu'à 5 000 g/mol, et de façon particulièrement préférentielle de jusqu'à 2 000 g/mol.

4. Composition de peinture selon l'une des revendications précédentes, la résine de polystyrène acrylate présentant une température de transition vitreuse (T_{G}) d'au moins 55 °C.

5. Composition de peinture selon l'une des revendications précédentes, le rapport du polystyrène acrylate non filmogène sur la résine de polystyrène acrylate, respectivement rapporté à la masse des solides, se situant dans la plage de 5 : 1 à 1 : 1, de préférence dans la plage de 4 : 1 à 1,2 : 1, plus préférentiellement dans la plage de 3 : 1 à 1,5 : 1, et étant de façon particulièrement préférentielle d'environ 2 : 1.

6. Composition de peinture selon l'une des revendications précédentes, renfermant en outre un agent dispersant hydrophobe, l'agent dispersant hydrophobe renfermant le sel d'un acide polycarbonique, de préférence un sel d'ammonium.

7. Composition de peinture selon l'une des revendications précédentes, renfermant en outre un agent réticulant, de préférence un agent réticulant inorganique.

8. Composition de peinture selon la revendication 7, l'agent réticulant inorganique renfermant du carbonate de zinc ammonium.

9. Composition de peinture selon l'une des revendications précédentes, renfermant en outre au moins un additif sélectionné parmi de la cire, de l'agent mouillant, de l'antimousse, de la base et de l'additif retardateur, de l'agent de coalescence.

10. Composition de peinture selon l'une des revendications précédentes, renfermant
- 45 à 65 % en poids du polystyrène acrylate non filmogène d'une température de transition vitreuse (T_{G}) d'au moins 100 °C (DSC) en forme d'une dispersion aqueuse,
- 8 à 12 % en poids de résine de polystyrène acrylate d'un poids moléculaire moyen (Mw) de jusqu'à 5 000 g/mol en forme d'un solide neutralisé,
- 10 à 14 % en poids d'un agent dispersant hydrophobe,
- 5 à 7 % en poids de l'agent réticulatant inorganique en solution,
- 4 à 7 % en poids d'une émulsion de cire de polyéthylène avec une teneur en solides de 32 % en poids,
- 1 à 3 % en poids de glycérine,
- 0,1 à 2 % en poids d'agent mouillant,
- 0,1 à 1 % en poids d'antimousse à base de silicone,
- de l'ammoniaque, et
- de l'eau, la somme des pourcentages se totalisant à 100 % en poids.

11. Utilisation d'une composition de peinture selon l'une des revendications précédentes, pour la préparation d'un film de peinture à microstructure sur un substrat.

12. Utilisation selon la revendication 11, le film de peinture à microstructure présentant une multiplicité de fissures d'une largeur maximale de 2 µm.

13. Utilisation selon l'une des revendications 11 et 12 en tant que couche primaire et/ou de vernis de surimpression sur des substrats, tels que papier, carton, carton-pâte ou feuille.
